# EUROPEAN PATENT SPECIFICATION

(11) **EP 3 725 570 B1**
(45) Date of publication and mention of the grant of the patent: **22.05.2024**
(21) Application number: 18889485.1
(22) Date of filing: 21.09.2018
(51) Int. Cl.: B60C 23/04, G08C 17/00, B60C 23/00

(54) **TIRE MOUNTING POSITION DETECTING SYSTEM, TIRE MOUNTING POSITION DETECTING METHOD, AND TIRE MOUNTING POSITION DETECTING PROGRAM**
REIFENMONTAGEPOSITIONSDETEKTIONSSYSTEM, REIFENMONTAGEPOSITIONSDETEKTIONSVERFAHREN UND REIFENMONTAGEPOSITIONSDETEKTIONSPROGRAMM
SYSTÈME DE DÉTECTION DE POSITION DE MONTAGE DE PNEU, PROCÉDÉ DE DÉTECTION DE POSITION DE MONTAGE DE PNEU, ET PROGRAMME DE DÉTECTION DE POSITION DE MONTAGE DE PNEU

(30) Priority: 15.12.2017 JP 2017240610
(43) Date of publication of application: 21.10.2020
(73) Proprietor: Bridgestone Corporation, Chuo-Ku Tokyo 104-8340 (JP)
(72) Inventor: HONDA, Kyohei, Tokyo 104-8340 (JP)
(74) Representative: Marks & Clerk LLP
(86) International application number: PCT/JP2018/035114
(87) International publication number: WO 2019/116667

(56) References cited:
- JP-A- 2006 160 189
- JP-A- 2006 272 995
- JP-A- 2006 273 077
- JP-A- 2007 045 201
- JP-A- 2008 254 559
- US-A1- 2009 084 174

## Description

### [Technical Field]

The present invention relates to a tire mount position detection system, a tire mount position detection method, and a tire mount position detection program that detect each tire having a transmitter is mounted to which wheel position of a vehicle.

### [Background Art]

In order to measure inner pressure or temperature of a tire mounted to a vehicle (here, it denotes a tire mounted to a rim wheel), it is known that a sensor including a transmitter of a radio signal (radio wave) is mounted in the tire.

The information detected by the sensor should be managed to be associated with a wheel position (right front wheel, left rear wheel, or the like) of the vehicle to which the tire is mounted. However, the wheel position to which the tire (sensor) is mounted is switched due to a rotation of the tires, and therefore the data relating to the correspondence between an identifier (ID) of the sensor and the wheel position should be updated as needed.

A method that automatically detects the wheel position to which the tire (sensor) is mounted, has been known in order to avoid such an update to be complicated. For example, a tire pressure monitoring system disclosed in Patent Literature 1 has two receivers in a front-rear direction of a vehicle so as to automatically detect a wheel position to which the tire (sensor) is mounted, by using the sensor mounted in the tire to detect a rotation direction of the tire. Attention is also drawn to the disclosure of JP2006-160189A.

### [Citation List]

### [Patent Literature]

[PTL 1] Japanese Unexamined Patent Application Publication No. 2007-045201

### [Summary of Invention]

However, in the tire pressure monitoring system described above, the sensor that detects the rotation direction is additionally arranged for detecting the wheel position to which the tire (sensor) is mounted. Such an additional sensor leads an increase of a cost and a failure rate of the system, and therefore the arranging of the additional sensor should be avoided as much as possible.

Further, intensity (transmission power) of a radio signal transmitted by the transmitter is varied depending on the individual performance thereof, and therefore, when automatically detecting the wheel position to which the tire (sensor) is mounted, the variation of the transmission power should be considered.

Accordingly, an object of the present invention is, in consideration of the problem described above, to provide a tire mount position detection system, a tire mount position detection method, and a tire mount position detection program capable of automatically detecting a wheel position to which a tire (sensor) is mounted, based on only a receiving state of a radio signal transmitted by a transmitter.

One aspect of the present invention is a tire mount position detection system (tire mount position detection system 100) that detects each tire (tire 31_{LO}, tire 31_{LI}, tire 31_{RI}, tire 31_{RO}, tire 32_{LO}, tire 32_{LI}, tire 32_{RI}, and tire 32_{RO}) having a transmitter (sensors 41 to 48) is mounted to which wheel position in a vehicle (trailer 10) having two axles (axles 21 and 22) in which each axle has a dual-wheel at each side. The tire mount position detection system includes: a receiver unit (receiver unit 105) arranged in the vehicle to receive a radio signal transmitted by the transmitter, the receiver unit including a first receiver (receiver 110) arranged at a position of which distances from respective wheel positions are different to each other, and a second receiver (receiver 120) arranged at the same position as the first receiver in a front-rear direction of the vehicle and arranged symmetric to the first receiver with respect to the center of the axle in a width direction of the vehicle; a first measurement portion (first measurement portion 210) that measures first signal intensity (R1(x)), which is intensity of the radio signal received by the first receiver, for each transmitter; a second measurement portion (second measurement portion 220) that measures second signal intensity (R2(x)), which is intensity of the radio signal received by the second receiver, for each transmitter; a calculation portion (signal intensity calculation portion 230) that calculates a difference (R1(x) - R2(x)) of the first signal intensity and the second signal intensity and a total value (R1(x) + R2(x)) of the first signal intensity and the second signal intensity, for each transmitter; and a position detection portion (position detection portion 250) that detects the wheel position to which the tire having the transmitter is mounted, based on the difference and the total value. The position detection portion detects: a width direction position of the transmitter in the width direction of the vehicle based on the magnitude of the difference (|R1(x) - R2(x)|); a front-rear direction position of the transmitter in the front-rear direction of the vehicle based on the total value; and the wheel position based on a combination of the width direction position and the front-rear direction position.

Another aspect of the present invention is a tire mount position detection method that detects each tire having a transmitter is mounted to which wheel position in a vehicle having two axles in which each axle has a dual-wheel at each side, the tire mount position detection method including: by using a receiver unit arranged in the vehicle to receive a radio signal transmitted by the transmitter, the receiver unit including a first receiver arranged at a position of which distances from respective wheel positions are different to each other, and a second receiver arranged at the same position as the first receiver in a front-rear direction of the vehicle and arranged symmetric to the first receiver with respect to the center of the axle in a width direction of the vehicle, measuring first signal intensity, which is intensity of the radio signal received by the first receiver, for each transmitter; measuring second signal intensity, which is intensity of the radio signal received by the second receiver, for each transmitter; calculating a difference of the first signal intensity and the second signal intensity and a total value of the first signal intensity and the second signal intensity, for each transmitter; and detecting the wheel position to which the tire having the transmitter is mounted, based on the difference and the total value. The detecting the wheel position includes: detecting a width direction position of the transmitter in the width direction of the vehicle based on an absolute value of the difference; detecting a front-rear direction position of the transmitter in the front-rear direction of the vehicle based on the total value; and detecting the wheel position based on a combination of the width direction position and the front-rear direction position.

The other aspect of the present invention is a tire mount position detection program that detects each tire having a transmitter is mounted to which wheel position in a vehicle having two axles in which each axle has a dual-wheel at each side, the vehicle including a receiver unit arranged in the vehicle to receive a radio signal transmitted by the transmitter, the receiver unit including a first receiver arranged at a position of which distances from respective wheel positions are different to each other, and a second receiver arranged at the same position as the first receiver in a front-rear direction of the vehicle and arranged symmetric to the first receiver with respect to the center of the axle in a width direction of the vehicle, the tire mount position detection program causing a computer to execute: a process that measures first signal intensity, which is intensity of the radio signal received by the first receiver, for each transmitter; a process that measures second signal intensity, which is intensity of the radio signal received by the second receiver, for each transmitter; a process that calculates a difference of the first signal intensity and the second signal intensity and a total value of the first signal intensity and the second signal intensity, for each transmitter; and a process that detects the wheel position to which the tire having the transmitter is mounted, based on the difference and the total value. The process that detects the wheel position detects: a width direction position of the transmitter in the width direction of the vehicle based on the magnitude of the difference; a front-rear direction position of the transmitter in the front-rear direction of the vehicle based on the total value; and the wheel position based on a combination of the width direction position and the front-rear direction position.

### [Brief Description of Drawings]

[Fig. 1] Fig. 1 is a schematic plane view of a vehicle including a tire mount position detection system 100.
[Fig. 2] Fig. 2 is a functional block diagram of a position detection device 200.
[Fig. 3] Fig. 3 is a flow chart illustrating a flow of an initial setting operation of the tire mount position detection system 100.
[Fig. 4] Fig. 4 is a flow chart illustrating a flow of a tire (sensor) position detection operation of the tire mount position detection system 100.
[Fig. 5] Fig. 5 is a table illustrating an example of a value of R1(x) - R2(x) and a value of R1(x) + R2(x) calculated by a signal intensity calculation portion 230.
[Fig. 6] Fig. 6 is a table after a width direction position of the sensor (tire) is detected.
[Fig. 7] Fig. 7 is a table after a group to which the sensor (tire) belongs is detected.
[Fig. 8] Fig. 8 is a view illustrating wheel positions that belong to a front outer group, a front inner group, a rear outer groove, and a rear inner groove of a trailer 10, respectively.
[Fig. 9] Fig. 9 is a schematic network configuration view including a schematic plane view of a trailer 10A according to another embodiment.

### [Description of Embodiments]

Hereinafter, embodiments will be described with reference to the drawings. The same reference signs or similar reference signs are assigned to the same functions or the same components and the description thereof is omitted as needed.

### (1) Schematic configuration of vehicle including tire mount position detection system

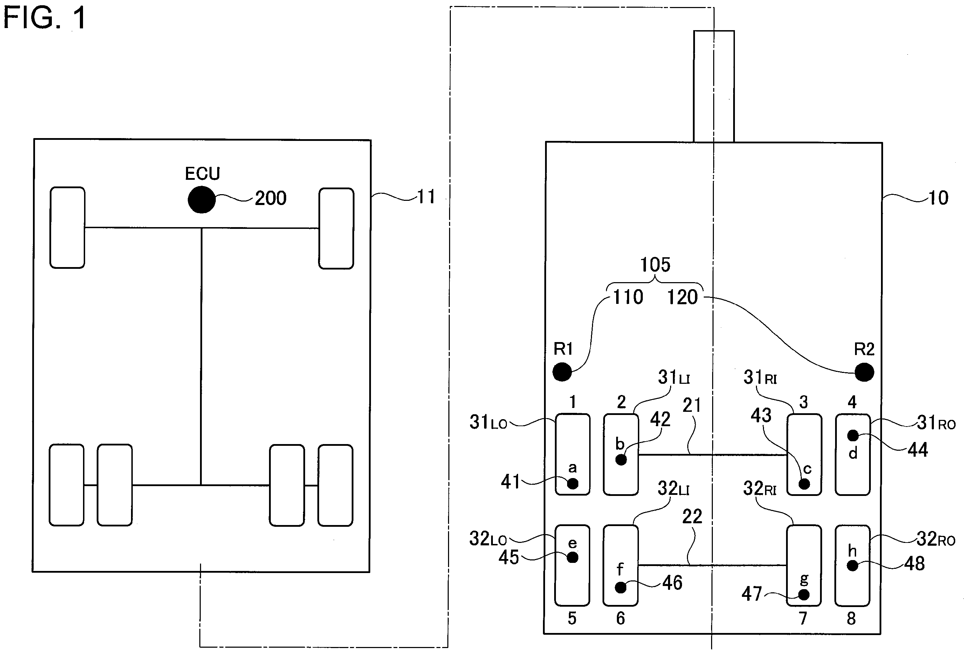

Fig. 1 is a schematic plane view of a vehicle including a tire mount position detection system 100. As shown in Fig. 1, a trailer 10 can be connected to a tractor 11 (see a one dotted chain line in the figure). In the present embodiment, the trailer 10 is served as the vehicle. That is, the trailer 10 is formed as a so-called semi-trailer towed by the tractor 11. The trailer 10 is provided with an axle 21 and an axle 22.

A sensor 41 that measures inner pressure and temperature of the tire 31_{LO} is mounted to the tire 31_{LO}. The sensor 41 may include a sensor that measures acceleration. The sensor 41 includes a transmitter that transmits data of the measured inner pressure and temperature. Similarly, sensors 42 to 44 are mounted to a tire 31_{LI}, a tire 31_{RI}, and a tire 31_{RO}, respectively.

Further, sensors 45 to 48 are mounted to a tire 32_{LO}, a tire 32_{LI}, a tire 32_{RI}, and a tire 32_{RO}, respectively.

Each of the sensors 41 to 48 can be suitably used for a tire pressure monitoring system (TPMS) or the like. An identifier "a" that identifies the sensor 41 (transmitter) is assigned to the sensor 41 as a sensor ID. Similarly, identifiers "b" to "h" are assigned to the sensors 42 to 48, respectively as sensor IDs.

In this way, the present embodiment is applied to the vehicle having two axles in which each axle (axle 21, 22) has a dual-wheel (so-called double tire) at each side, each tire having the transmitter.

Here, as shown in Fig. 1, each sensor is attached near an air valve (not shown) or on an inner surface of a tread of the tire, and therefore the position of the sensor in a tire circumferential direction, namely the position of the sensor in a front-rear direction of the vehicle, is changed due to the rotation of the tire.

The tire mount position detection system 100 detects that each of the tire 31_{LO}, the tire 31_{LI}, the tire 31_{RI}, the tire 31_{RO}, the tire 32_{LO}, the tire 32_{LI}, the tire 32_{RI}, and the tire 32_{RO} to which the sensors (transmitters) 41 to 48 are mounted, is mounted to which wheel position (positions 1 to 8 in the figure) of the trailer 10.

The tire mount position detection system 100 includes a receiver unit 105 and a position detection device 200. The receiver unit 105 is arranged in the trailer 10 so as to receive the radio signals (radio wave) transmitted by the sensors (transmitters) 41 to 48.

In the present embodiment, the receiver unit 105 is formed by a receiver 110 and a receiver 120. In the present embodiment, the receiver 110 is served as a first receiver. Further, the receiver 120 is served as a second receiver.

The receiver 110 is described as "R1" as needed, for convenience of description. The receiver 110 receives the radio signals transmitted by the sensors (transmitters), namely the sensors 41 to 48. Here, intensity (transmission power) and a frequency band of the radio signal may be different depending on a use area of the tire mount position detection system 100 or a type of the trailer 10.

The receiver 120 is described as "R2" as needed, for convenience of description. The receiver 120 also receives the radio signals transmitted by the sensors 41 to 48. The receiver 120 is arranged at a position different from that of the receiver 110.

The receiver 110 is arranged at a position of which distances from respective wheel positions are different to each other. Similarly, the receiver 120 is also arranged at a position of which distances from respective wheel positions are different to each other.

In the present embodiment, the receiver 110 is arranged on an extension line of the wheel at a left outer side. Specifically, the receiver 110 is arranged on the extension line passing the tire 31_{LO} along a front-rear direction of the vehicle. More specifically, the receiver 110 is arranged at a front side of the tire 31_{LO}.

The receiver 120 is arranged at the same position as the receiver 110 in the front-rear direction of the vehicle. The receiver 120 is arranged symmetric to the receiver 110 with respect to the center (a position shown by a one dotted chain line in the figure) of the axle 21 (axle 22) in a width direction of the vehicle.

In the present embodiment, the receiver 120 is arranged on an extension line of the wheel at a right outer side. Specifically, the receiver 120 is arranged on the extension line passing the tire 31_{RO} along the front-rear direction of the vehicle. More specifically, the receiver 120 is arranged at a front side of the tire 31_{RO}.

The position detection device 200 detects the wheel positions (positions 1 to 8) to which the tire 31_{LO}, the tire 31_{LI}, the tire 31_{RI}, the tire 31_{RO}, the tire 32_{LO}, the tire 32_{LI}, the tire 32_{RI}, and the tire 32_{RO}, namely the sensors 41 to 48 are mounted, by using the receiver unit 105. In the present embodiment, the position detection device 200 is installed as a part of an electronic control unit (ECU) mounted to the tractor 11. Here, as described below, a function achieved by the position detection device 200 may be arranged at an outside (cloud server or the like) of the trailer 10, connected via a communication network.

### (2) Functional block configuration of tire mount position detection system

Next, a functional block configuration of the tire mount position detection system 100 will be described. Specifically, a functional block configuration of the position detection device 200 forming the tire mount position detection system 100 will be described.

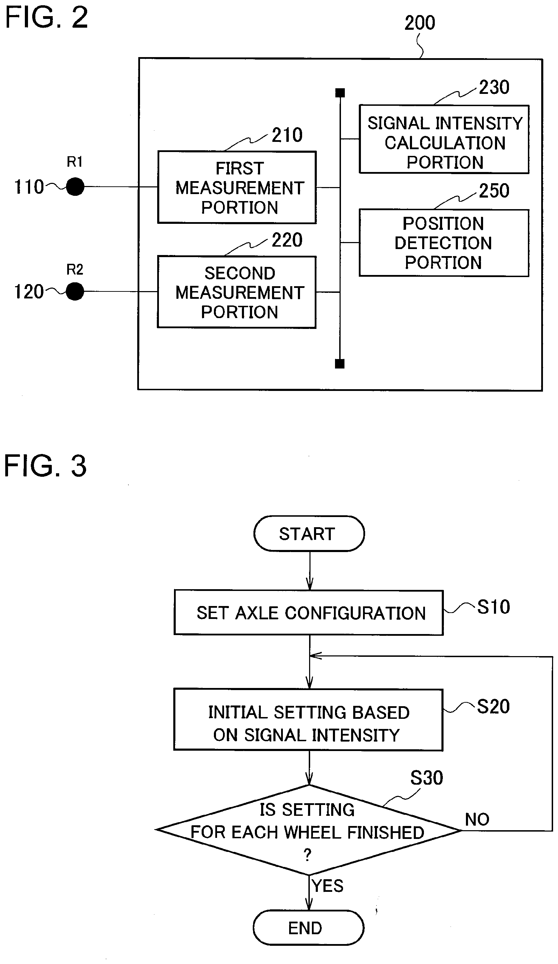

Fig. 2 is the functional block diagram of the position detection device 200. As shown in Fig. 2, the position detection device 200 is provided with a first measurement portion 210, a second measurement portion 220, a signal intensity calculation portion 230, and a position detection portion 250.

The position detection device 200 includes hardware such as a CPU and a memory, and the functional portions described above can be achieved by executing a computer program (software) on the hardware.

The first measurement portion 210 is connected to the receiver 110. The first measurement portion 210 measures the intensity (first signal intensity) of the radio signals received by the receiver 110, for each of the sensors (transmitters) 41 to 48.

The second measurement portion 220 is connected to the receiver 120. The second measurement portion 220 measures the intensity (second signal intensity) of the radio signals received by the receiver 120, for each of the sensors (transmitters) 41 to 48.

Hereinafter, a signal, which is transmitted from the sensor 41 (sensor ID: a), received by the receiver 110 (first receiver) is described as R1(a). Similarly a signal, which is transmitted from the sensor 41 (sensor ID: a), received by the receiver 120 (second receiver) is described as R2(a) (the same shall be applied to other sensors).

The intensity of the radio signal which is a measurement target of the first measurement portion 210 and the second measurement portion 220 may be a voltage level or a power level. Or alternatively, the intensity of the radio signal may be a value with a unit of decibel (dB). In the present embodiment, the voltage level (unit of V) is adopted.

Further, in the present embodiment, each of the radio signals transmitted by the sensors 41 to 48 includes the sensor ID (identifier) that identifies each sensor (transmitter).

The signal intensity calculation portion 230 executes a calculation using the intensity of the radio signals measured by the first measurement portion 210 and the second measurement portion 220.

Specifically, the signal intensity calculation portion 230 calculates a difference between the first signal intensity and the second signal intensity for each sensor (transmitter). For example, the signal intensity calculation portion 230 calculates the difference (R1(a) - R2(a)) of R1(a) and R2(a) using the intensity of the radio signal received from the sensor 41. The signal intensity calculation portion 230 similarly calculates the differences (R1(x) - R2(x)) of the first signal intensity and the second signal intensity for each of the sensors 42 to 48.

Further, the signal intensity calculation portion 230 calculates a total value of the first signal intensity and the second signal intensity for each sensor (transmitter). For example, the signal intensity calculation portion 230 calculates the total value (R1(a) + R2(a)) of R1(a) and R2(a) using the intensity of the radio signal received from the sensor 41. The signal intensity calculation portion 230 similarly calculates the total value (R1(x) + R2(x)) of the first signal intensity and the second signal intensity for each of the sensors 42 to 48.

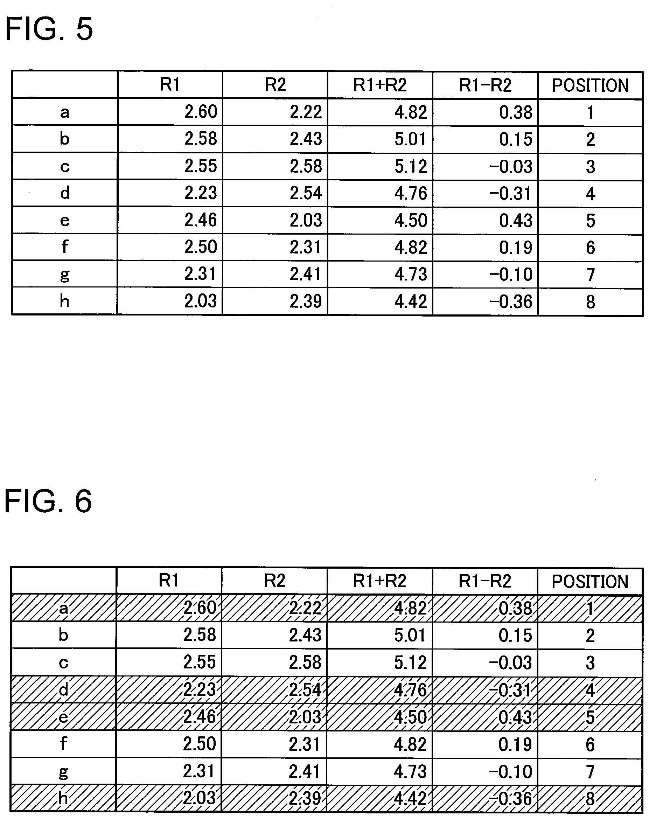

Fig. 5 is a table illustrating an example of the value of R1(x) - R2(x) and the value of R1(x) + R2(x) calculated by the signal intensity calculation portion 230. As shown in Fig. 5, the signal intensity calculation portion 230 calculates the value of R1(x) - R2(x) and the value of R1(x) + R2(x) for each sensor. Here, the value shown in Fig. 5 is represented as a voltage level (unit of V). Further, as described above, the position of the sensor in the front-rear direction of the vehicle may be changed due to the rotation of the tire, and therefore the value is preferably defined by an average of the values measured plural times while the tire rotates once.

The position detection portion 250 detects the wheel position of the tire to which the sensor (transmitter) is mounted. Specifically, the position detection portion 250 detects each of the wheel positions of the tire 31_{LO}, the tire 31_{LI}, the tire 31_{RI}, the tire 31_{RO}, the tire 32_{LO}, the tire 32_{LI}, the tire 32_{RI}, and the tire 32_{RO} to which the sensors 41 to 48 are mounted respectively.

Specifically, the position detection portion 250 detects the wheel position of the tire to which the sensor (transmitter) is mounted based on the difference (R1(x) - R2(x)) of the first signal intensity and the second signal intensity and the total value (R1(x) + R2(x)) of the first signal intensity and the second signal intensity.

More specifically, the position detection portion 250 detects the position of the sensor in the width direction of the vehicle (width direction position) based on the magnitude of the value of R1(x) - R2(x), namely an absolute value (|R1(x) - R2(x)|). Further, the position detection portion 250 detects the position of the sensor in the front-rear direction of the vehicle (front-rear direction position) based on the value R1(x) + R2(x).

The position detection portion 250 detects the wheel positions (positions 1 to 8) based on a combination of the detected width direction position of the sensor and the detected front-rear direction position of the sensor. Specifically, the position detection portion 250 determines that the sensor belongs to which group among a front outer group, a front inner group, a rear outer group, and a rear inner group, based on the combination of the detected width direction position of the sensor and the detected front-rear direction position of the sensor.

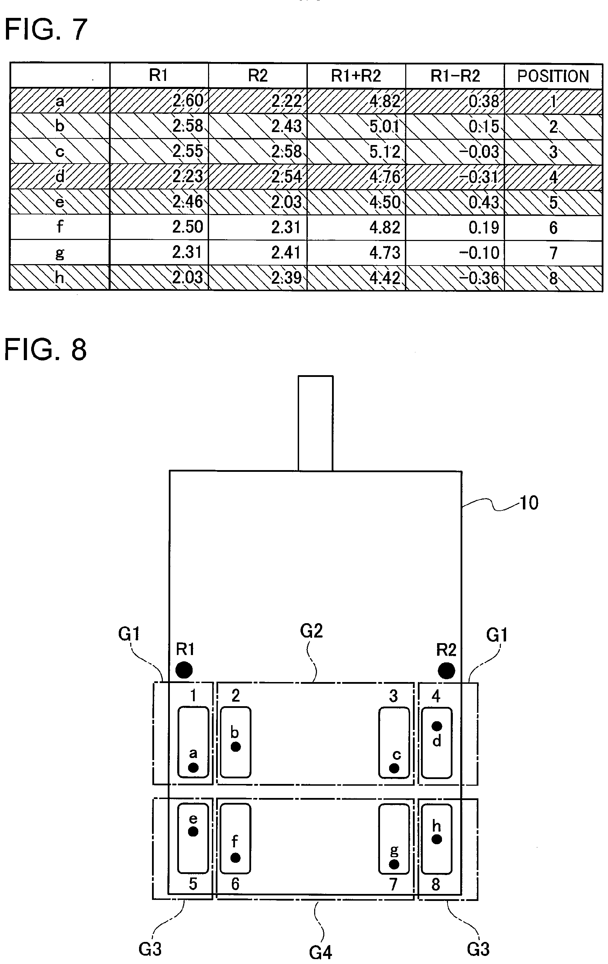

Fig. 8 is a view illustrating the wheel positions that belong to the front outer group, the front inner group, the rear outer groove, and the rear inner groove of the trailer 10, respectively.

As shown in Fig. 8, the wheel positions 1 and 4 are included in the front outer group G1. The wheel positions 2 and 3 are included in the front inner group G2. The wheel positions 5 and 8 are included in the rear outer group G3. The wheel positions 6 and 7 are included in the rear inner group G4.

Further, the position detection portion 250 detects the wheel position within the determined group based on whether the value of R1(x) - R2(x) is a positive value (+) or a negative value (-). Or alternatively, the position detection portion 250 may detect the wheel position within the determined group based on the absolute value (|R1(x) - R2(x)|) of R1(x) - R2(x). A specific example of detecting the wheel position is described below.

### (3) Operation of tire mount position detection system

Next, operation of the tire mount position detection system 100 described above will be described. Specifically, an initial setting operation, and a tire (sensor) position detection operation of the tire mount position detection system 100 will be described.

### (3. 1) Initial setting operation

Fig. 3 is a flow chart illustrating a flow of the initial setting operation of the tire mount position detection system 100. As shown in Fig. 3, firstly, a basic configuration of the trailer 10 to which the tire mount position detection system 100 is mounted is set.

Specifically, an axle configuration of the trailer 10 is set (S10). The axle configuration includes information relating to the number of axles of the trailer 10, the presence or absence of a dual-wheel (double tire), the number of the tires, and the like. The setting of the groups shown in Fig. 8 (front outer group G1, front inner group G2, rear outer group G3 and rear inner group G4) is also included.

As described above, the present embodiment is applied to the vehicle having two axles (axles 21, 22) to which the dual-wheel (double tire) is provided.

Secondly, an initial setting is executed based on the received signal intensity of the radio signal transmitted from each wheel position (S20). Specifically, the signal intensity linked to each wheel position in each group is set based on the received signal intensity of the radio signal transmitted from each wheel position. In particular, the signal intensity is largely changed depending on a body structure of the trailer 10, and a type, a size and a position of a component (for example, fuel tank) to be mounted. Thus, the signal intensity, which is standard in each position, is adjusted based on such a transmission environment.

The initial setting of the signal intensity described above is repeatedly executed for each wheel, and thereafter the setting operation is ended (S30).

### (3. 2) Tire (sensor) position detection operation

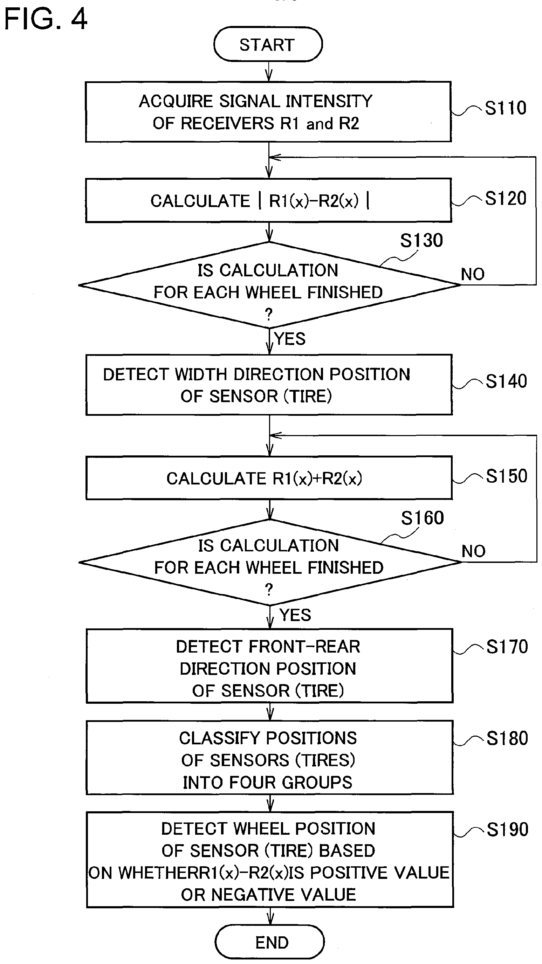

Fig. 4 is a flow chart illustrating a flow of the tire (sensor) position detection operation of the tire mount position detection system 100. As shown in Fig. 4, the tire mount position detection system 100 acquires the signal intensity of the radio signal, which is transmitted by each sensor, received by the receiver R1 and the receiver R2 (S110).

The tire mount position detection system 100 calculates the absolute value (|R1(x) - R2(x)|) of the difference of the signal intensity of the radio signal received by the receiver R1 and the signal intensity of the radio signal received by the receiver R2, for each sensor (S120). Here, the absolute value of the difference is described as |R1(x) - R2(x)| (x denotes the sensor ID). The tire mount position detection system 100 repeats the calculation of the difference for each wheel (S130).

Next, the tire mount position detection system 100 detects the width direction position of the sensor (tire) based on the difference (S140). Here, a detecting method for the width direction position is exemplarily described using R1(a), R1(b), R2(a), and R2(b). Both of the wheel position 1 (tire 31_{LO}) and the wheel position 2 (tire 31_{LI}) are extremely close to the receiver 110 (R1), and therefore the difference between the value of R1(a) and the value of R1(b) is not large.

On the other hand, the receiver 120 (R2) is located at a side opposite to the tire 31_{LO} and the tire 31_{LI} in the trailer 10, and therefore the receiver 120 (R2) is far away from the tire 31_{LO} and the tire 31_{LI}. Thus, the difference of the received intensity of the radio signal (radio wave) is large between an outer side and an inner side in the double tire.

That is, in the receiver 120, the radio signal transmitted by the sensor 41 (a) at the outer side of the vehicle is received with low intensity compared to the radio signal transmitted by the sensor 42 (b) at the inner side of the vehicle, and therefore R2(a) << R2(b) is fulfilled. Thus, the values of R1(x) - R2(x) are largely different.

This can be applied to the double tire at other positions, and it can be determined that the sensor of which the value of |R1(x) - R2(x) | is large is located at the outer side in the double tire. The tire mount position detection system 100 uses such a condition to determine the wheel position to which an unknown tire is mounted is located at whether the inner side or the outer side in the double tire.

Fig. 6 is a table after the width direction position of the sensor (tire) is detected through the process of Step S140. As shown in Fig. 6, it is determined that the tire of which the value of | R1(x) - R2(x) | is large is located at the outer side in the width direction of the vehicle in the double tire (the tire at the wheel positions 1, 4, 5, and 8 (see "POSITION" in the figure)).

Next, the tire mount position detection system 100 calculates the total value (R1(x) + R2(x)) of the signal intensity of the radio signal received by the receiver R1 and the signal intensity of the radio signal received by the receiver R2 (S150). The tire mount position detection system 100 repeats the calculation of the total value for each wheel (S160).

Next, the tire mount position detection system 100 detects the front-rear direction position of the sensor (tire) based on the total value (S170). As described above, the radio signal transmitted by the sensor located at the inner side in the double tire is received with high intensity compared to the radio signal transmitted by the sensor located at the outer side in the double tire.

That is, the value of R1(x) + R2(x) of the sensor located at the inner side in the double tire is larger than the value of R1(x) + R2(x) of the sensor located at the outer side in the double tire. Further, in the present embodiment, the receiver 110 and the receiver 120 are located at the front side of the tire (specifically, the tire 31_{LO}, the tire 31_{LI}, the tire 31_{RI}, and the tire 31_{RO}), and therefore the value of R1(x) + R2(x) of the sensor of the tire (wheel positions 1, 2, 3, and 4) is larger than the value of R1(x) + R2(x) of the sensor of the rear tire (the tire 32_{LO}, the tire 32_{LI}, the tire 32_{RI}, and the tire 32_{RO}).

Thus, it is determined that the wheel positions (POSITION) of which the value of R1(x) + R2(x) is the largest are the wheel positions 2 and 3. While, it is determined that the wheel positions (POSITION) of which the value of R1(x) + R2(x) is the smallest are the wheel positions 5 and 8.

The tire mount position detection system 100 classifies the positions of the sensors (tires) into four groups based on the detected width direction position and the detected front-rear direction position detected of each sensor (tire) (S180).

Specifically, the tire mount position detection system 100 determines, based on a combination of the detected width direction position of the sensor and the detected front-rear direction position of the sensor, that the sensor belongs to which group among the front outer group G1, the front inner group G2, the rear outer group G3, and the rear inner group G4 (see Fig. 8).

Fig. 7 is a table after the group to which the sensor (tire) belongs is detected through the process of Step S180. As shown in Fig. 7, each of the wheel positions 1 and 4, the wheel positions 2 and 3, the wheel positions 5 and 8, and the wheel positions 6 and 7 is classified in the same group.

Further, based on the value of R1(x) - R2(x) (|R1(x) - R2(x)|) and the value of R1(x) + R2(x), the wheel positions 1 and 4 are classified into the front outer group G1, the wheel positions 2 and 3 are classified into the front inner group G2, the wheel positions 5 and 8 are classified into the rear outer group G3, and the wheel positions 6 and 7 are classified into the rear inner group G4.

Next, the tire mount position detection system 100 detects the wheel position of each sensor within the group (S190). Specifically, the tire mount position detection system 100 detects the wheel position of each sensor within the group based on whether the value of R1(x) - R2(x) is a positive value or a negative value.

That is, the groups are symmetrically arranged with respect to the center of the trailer 10 in the width direction of the vehicle, and thereby it can be determined the sensor is close to which receiver using the sign (positive or negative) of the value of R1(x) - R2(x).

Further, the tire mount position detection system 100 may determine the wheel position of each sensor within the group, namely the wheel position is located at a right side or a left side, by using only the magnitude of the value of |R1(x) - R2(x)| instead of the sign of the value of R1(x) - R2(x) (namely, by using data of which the value of | R1(x) - R2(x) | is larger).

### (4) Functions and effects

According to the embodiment described above, the following functions and effects are obtained. Specifically, according to the tire mount position detection system 100, the wheel position to which the tire having the sensor is mounted is detected, based on the first signal intensity (for example, R1(x)), which is the intensity of the radio signal received by the receiver 110 from the sensor (transmitter), the second signal intensity (R2(x)), which is the intensity of the radio signal received by the receiver 120 from the sensor (transmitter), the difference (R1(x) - R2(x)) of the first signal intensity and the second signal intensity, and the total value (R1(x) + R2(x)) of the first signal intensity and the second signal intensity.

More specifically, the tire mount position detection system 100 detects the wheel position of the sensor based on the combination of the width direction position of the sensor in the width direction of the vehicle detected using the absolute value (|R1(x) - R2(x)|) of R1(x) - R2(x) and the front-rear direction position of the sensor in the front-rear direction of the vehicle detected using the value of R1(x) + R2(x).

With this, the wheel position to which the tire (sensor) is mounted can be automatically detected based on only the receiving state of the radio signal transmitted by the sensor. That is, a sensor that detects the rotation direction of the tire is not needed in order to detect the wheel position to which each tire is mounted. Consequently, an increase of a cost and a failure rate of the system can be avoided.

That is, according to the tire mount position detection system 100, even when the wheel position to which the tire having the sensor is mounted is switched due to the rotation of the tires, the wheel position to which the tire (sensor) is mounted can be detected automatically, and further the wheel position to which the tire (sensor) is mounted can be detected automatically based on only the receiving state of the radio signal transmitted by the sensor.

Further, in the present embodiment, the wheel position is detected using both of the difference (R1(x) - R2(x)) and the total value (R1(x) + R2(x)), and therefore even when the intensity (transmission power) of the radio signal transmitted by the sensor (transmitter) is varied, the wheel position to which the tire (sensor) is mounted can be detected precisely.

In the present embodiment, the tire mount position detection system 100 determines, based on the combination of the detected width direction position of the sensor and the detected front-rear direction position of the sensor, that the sensor belongs to which group among the front outer group G1, the front inner group G2, the rear outer group G3, and the rear inner group G4. Further, the tire mount position detection system 100 detects the wheel position within the group based on whether the difference (R1(x) - R2(x)) is a positive value or a negative value.

With this, the determination can be executed step by step using the difference (R1(x) - R2(x)) and the total value (R1(x) + R2(x)), and therefore the wheel position to which the tire (sensor) is mounted can be detected more precisely.

In the present embodiment, the receiver 110 is arranged on the extension line passing the wheel at the left outer side (tire 31_{LO}) along the front-rear direction of the vehicle, and the receiver 120 is arranged on the extension line passing the wheel at the right outer side (tire 32_{RO}) along the front-rear direction of the vehicle. With this, the intensity of the radio signal transmitted by each sensor is apt to be different between the sensors, and thereby the wheel position to which the tire (sensor) is mounted can be detected more precisely.

In the present embodiment, the radio signal transmitted by the sensor (transmitter) includes the identifier (sensor ID) that identifies the sensor (transmitter). With this, the tire mount position detection system 100 can easily identify the radio signal transmitted by each sensor.

In the present embodiment, the trailer 10 is served as a vehicle towed by the tractor 11. Accordingly, even in the vehicle having two axles in which each axle (axle 21, 22) has a dual-wheel (so-called double tire) at each side like the trailer 10, the wheel position to which the tire (sensor) is mounted can be detected more precisely.

### (5) Other embodiments

As described above, the contents of the present invention are described with reference to the examples, however the present invention is not limited to those descriptions. It is obvious for a person skilled in the art to adopt various modifications and improvement.

In the embodiment described above, the position detection device 200 is installed as a part of the electronic control unit (ECU) mounted to the tractor 11, however the function achieved by the position detection device 200 may be modified as below.

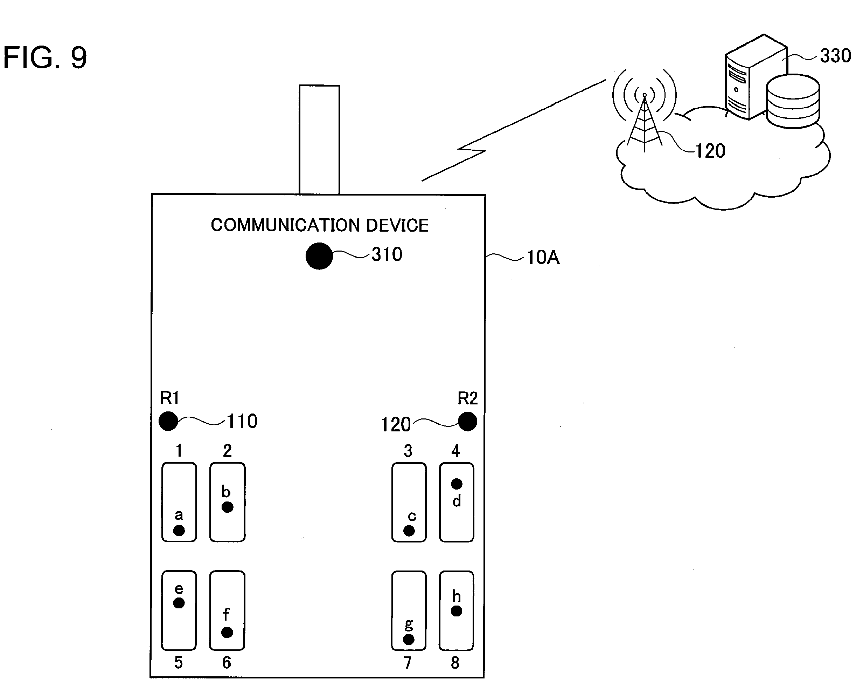

Fig. 9 is a schematic network configuration view including a schematic plane view of a trailer 10A according to another embodiment. As shown in Fig. 9, the trailer 10A is provided with a communication device 310 instead of the position detection device 200.

The communication device 310 can execute radio communication with a radio base station 320. The communication device 310 is formed by, for example, a radio communication terminal connectable to a mobile communication network (LTE or the like).

A server computer 330 is arranged on the communication network so as to achieve the functions (the first measurement portion 210, the second measurement portion 220, the signal intensity calculation portion 230, and the position detection portion 250), which are achieved by the position detection device 200 as described above.

Further, a program (software) that achieves the functions may be stored on the communication network in a downloadable state, or may be provided by a storage medium in which the program is stored.

Further, the embodiments described above are applied to the trailer 10 as an example, however the vehicle is not limited to a trailer as long as the vehicle has the axles in which each axle has a dual-wheel (double tire) at each side.

In the embodiments described above, the absolute value (|R1(x) - R2(x)|) of the difference (R1(x) - R2(x)) of the first signal intensity and the second signal intensity is used, however a value other than the absolute value may be used as long as the value can indicate the magnitude of the difference. For example, the square ((R1(x) - R2(x))²) of the difference (R1(x) - R2(x)) may be adopted.

### [Reference Signs List]

10, 10A: trailer
11: tractor
21, 22: axle
31_{LI}, 31_{LO}, 31_{RI}, 31_{RO}, 32_{LI}, 32_{LO}, 32_{RI}, 32_{RO}: tire
41 to 48: sensor
100: tire mount position detection system
105: receiver unit
110, 120: receiver
200: position detection device
210: first measurement portion
220: second measurement portion
230: signal intensity calculation portion
250: position detection portion
310: communication device
320: radio base station
330: server computer

## Claims

1. A tire mount position detection system (100) that detects each tire (31LO, 31LI, 31RI, 31RO, 32LO, 32LI, 32RI, 32RO) having a transmitter (41 to 48) is mounted to which wheel position in a vehicle (10) having two axles (21, 22) in which each axle (21, 22) has a dual-wheel at each side,
the tire mount position detection system (100) comprising:
a receiver unit (105) arranged in the vehicle (10) to receive a radio signal transmitted by the transmitter (41 to 48), wherein the receiver unit (105) comprises a first receiver (110) arranged at a position of which distances from respective wheel positions are different to each other, and a second receiver (120) arranged at the same position as the first receiver (110) in a front-rear direction of the vehicle (10) and arranged symmetric to the first receiver (110) with respect to the center of the axle (21, 22) in a width direction of the vehicle (10);
a first measurement portion (210) that measures first signal intensity (R1(x)), which is intensity of the radio signal received by the first receiver (110), for each transmitter (41 to 48); and
a second measurement portion (220) that measures second signal intensity (R2(x)), which is intensity of the radio signal received by the second receiver (120), for each transmitter (41 to 48);
**characterized by**
a calculation portion (230) that calculates a difference of the first signal intensity (R1(x)) and the second signal intensity (R2(x)) and a total value of the first signal intensity (R1(x)) and the second signal intensity (R2(x)), for each transmitter (41 to 48); and
a position detection portion (250) that detects the wheel position to which the tire (31LO, 31LI, 31RI, 31RO, 32LO, 32LI, 32RI, 32RO) having the transmitter (41 to 48) is mounted, based on the difference and the total value,
wherein the position detection portion (250) detects:
a width direction position of the transmitter (41 to 48) in the width direction of the vehicle (10) based on the magnitude of the difference;
a front-rear direction position of the transmitter (41 to 48) in the front-rear direction of the vehicle (10) based on the total value; and
the wheel position based on a combination of the width direction position and the front-rear direction position.

2. The tire mount position detection system (100) according to claim 1,
wherein the position detection portion (250) determines that the transmitter (41 to 48) belongs to which group among a front outer group (G1), a front inner group (G2), a rear outer group (G3), and a rear inner group (G4), based on the combination of the width direction position and the front-rear direction position, and
wherein the position detection portion (250) detects the wheel position within the group based on whether the difference is a positive value of a negative value.

3. The tire mount position detection system (100) according to claim 1,
wherein the position detection portion (250) determines that the transmitter (41 to 48) belongs to which group among a front outer group (G1), a front inner group (G2), a rear outer group (G3), and a rear inner group (G4), based on the combination of the width direction position and the front-rear direction position, and
wherein the position detection portion (250) detects the wheel position within the group based on an absolute value of the difference.

4. The tire mount position detection system (100) according to any one of claims 1 to 3,
wherein the first receiver (110) is arranged on an extension line passing a wheel at a left outer side along the front-rear direction of the vehicle (10), and
wherein the second receiver (120) is arranged on an extension line passing a wheel at a right outer side along the front-rear direction of the vehicle (10).

5. The tire mount position detection system (100) according to any one of claims 1 to 4,
wherein the radio signal transmitted by the transmitter (41 to 48) includes an identifier that identifies the transmitter (41 to 48).

6. The tire mount position detection system (100) according to any one of claims 1 to 5,
wherein the vehicle (10) is formed as a trailer (10) towed by a tractor (11).

7. A tire mount position detection method that detects each tire (31LO, 31LI, 31RI, 31RO, 32LO, 32LI, 32RI, 32RO) having a transmitter (41 to 48) is mounted to which wheel position in a vehicle (10) having two axles (21, 22) in which each axle (21, 22) has a dual-wheel at each side,
the tire mount position detection method comprising: by using a receiver unit (105) arranged in the vehicle (10) to receive a radio signal transmitted by the transmitter (41 to 48), wherein the receiver unit (105) comprises a first receiver (110) arranged at a position of which distances from respective wheel positions are different to each other, and a second receiver (120) arranged at the same position as the first receiver (110) in a front-rear direction of the vehicle (10) and arranged symmetric to the first receiver (110) with respect to the center of the axle (21, 22) in a width direction of the vehicle (10),
measuring first signal intensity (R1(x)), which is intensity of the radio signal received by the first receiver (110), for each transmitter (41 to 48); and
measuring second signal intensity (R2(x)), which is intensity of the radio signal received by the second receiver (120), for each transmitter (41 to 48);
**characterized by**
calculating a difference of the first signal intensity (R1(x)) and the second signal intensity (R2(x)) and a total value of the first signal intensity (R1(x)) and the second signal intensity (R2(x)), for each transmitter (41 to 48); and
detecting the wheel position to which the tire (31LO, 31LI, 31RI, 31RO, 32LO, 32LI, 32RI, 32RO) having the transmitter (41 to 48) is mounted, based on the difference and the total value,
wherein the detecting the wheel position includes:
detecting a width direction position of the transmitter (41 to 48) in the width direction of the vehicle (10) based on an absolute value of the difference;
detecting a front-rear direction position of the transmitter (41 to 48) in the front-rear direction of the vehicle (10) based on the total value; and
detecting the wheel position based on a combination of the width direction position and the front-rear direction position.

8. A tire mount position detection program that detects each tire (31LO, 31LI, 31RI, 31RO, 32LO, 32LI, 32RI, 32RO) having a transmitter (41 to 48) is mounted to which wheel position in a vehicle (10) having two axles (21, 22) in which each axle (21, 22) has a dual-wheel at each side, the vehicle (10) comprising a receiver unit (105) arranged in the vehicle (10) to receive a radio signal transmitted by the transmitter (41 to 48), wherein the receiver unit (105) comprises a first receiver (110) arranged at a position of which distances from respective wheel positions are different to each other, and a second receiver (120) arranged at the same position as the first receiver (110) in a front-rear direction of the vehicle (10) and arranged symmetric to the first receiver (110) with respect to the center of the axle (21, 22) in a width direction of the vehicle (10),
the tire mount position detection program causing a computer to execute:
a process that measures first signal intensity (R1(x)), which is intensity of the radio signal received by the first receiver (110), for each transmitter (41 to 48); and
a process that measures second signal intensity (R2(x)), which is intensity of the radio signal received by the second receiver (120), for each transmitter (41 to 48);
and **characterized by** causing a computer to execute:
a process that calculates a difference of the first signal intensity (R1(x)) and the second signal intensity (R2(x)) and a total value of the first signal intensity (R1(x)) and the second signal intensity (R2(x)), for each transmitter (41 to 48); and
a process that detects the wheel position to which the tire (31LO, 31LI, 31RI, 31RO, 32LO, 32LI, 32RI, 32RO) having the transmitter (41 to 48) is mounted, based on the difference and the total value,
wherein the process that detects the wheel position detects:
a width direction position of the transmitter (41 to 48) in the width direction of the vehicle (10) based on an absolute value of the difference;
a front-rear direction position of the transmitter (41 to 48) in the front-rear direction of the vehicle (10) based on the total value; and
the wheel position based on a combination of the width direction position and the front-rear direction position.

## Patentansprüche

1. Reifenmontage-Positionserkennungssystem (100), das für jeden Reifen (31LO, 31LI, 31RI, 31RO, 32LO, 32LI, 32RI, 32RO) mit einem Sender (41 bis 48) erkennt, an welcher Radposition in einem Fahrzeug (10) mit zwei Achsen (21, 22), bei dem jede Achse (21, 22) ein Zwillingsrad an jeder Seite aufweist, er montiert ist,
wobei das Reifenmontage-Positionserkennungssystem (100) Folgendes umfasst:
eine Empfängereinheit (105), die in dem Fahrzeug (10) zum Empfangen eines vom Sender (41 bis 48) gesendeten Funksignals angeordnet ist, wobei die Empfängereinheit (105) einen ersten Empfänger (110), der an einer Position angeordnet ist, deren Abstände von jeweiligen Radpositionen sich voneinander unterscheiden, und einen zweiten Empfänger (120) umfasst, der an der gleichen Position wie der erste Empfänger (110) in einer Front-Heck-Richtung des Fahrzeugs (10) angeordnet ist und symmetrisch zum ersten Empfänger (110) in Bezug auf die Mitte der Achse (21, 22) in einer Breitenrichtung des Fahrzeugs (10) angeordnet ist;
einen ersten Messteil (210), der eine erste Signalintensität (R1(x)), die eine Intensität des vom ersten Empfänger (110) empfangenen Funksignals ist, für jeden Sender (41 bis 48) misst; und
einen zweiten Messteil (220), der eine zweite Signalintensität (R2(x)), die eine Intensität des vom zweiten Empfänger (120) empfangenen Funksignals ist, für jeden Sender (41 bis 48) misst;
**gekennzeichnet durch**
einen Rechenteil (230), der eine Differenz der ersten Signalintensität (R1(x)) und der zweiten Signalintensität (R2(x)) und einen Gesamtwert der ersten Signalintensität (R1(x)) und der zweiten Signalintensität (R2(x)) für jeden Sender (41 bis 48) berechnet; und
einen Positionserkennungsteil (250), der die Radposition, an der der Reifen (31L0, 31LI, 31RI, 31RO, 32LO, 32LI, 32RI, 32RO) mit dem Sender (41 bis 48) montiert ist, auf der Basis der Differenz und des Gesamtwerts erkennt,
wobei der Positionserkennungsteil (250) Folgendes erkennt:
eine Breitenrichtungsposition des Senders (41 bis 48) in der Breitenrichtung des Fahrzeugs (10) auf der Basis der Größe der Differenz;
eine Front-Heck-Richtungsposition des Senders (41 bis 48) in der Front-Heck-Richtung des Fahrzeugs (10) auf der Basis des Gesamtwerts; und
die Radposition auf der Basis einer Kombination aus der Breitenrichtungsposition und der Front-Heck-Richtungsposition.

2. Reifenmontage-Positionserkennungssystem (100) nach Anspruch 1,
wobei der Positionserkennungsteil (250) bestimmt, zu welcher Gruppe aus einer vorderen äußeren Gruppe (G1), einer vorderen inneren Gruppe (G2), einer hinteren äußeren Gruppe (G3) und einer hinteren inneren Gruppe (G4) der Sender (41 bis 48) gehört, auf der Basis der Kombination aus der Breitenrichtungsposition und der Front-Heck-Richtungsposition, und
wobei der Positionserkennungsteil (250) die Radposition innerhalb der Gruppe auf der Basis davon erkennt, ob die Differenz ein positiver Wert eines negativen Werts ist.

3. Reifenmontage-Positionserkennungssystem (100) nach Anspruch 1,
wobei der Positionserkennungsteil (250) bestimmt, zu welcher Gruppe aus einer vorderen äußeren Gruppe (G1), einer vorderen inneren Gruppe (G2), einer hinteren äußeren Gruppe (G3) und einer hinteren inneren Gruppe (G4) der Sender (41 bis 48) gehört, auf der Basis der Kombination aus der Breitenrichtungsposition und der Front-Heck-Richtungsposition, und
wobei der Positionserkennungsteil (250) die Radposition innerhalb der Gruppe auf der Basis eines Absolutwerts der Differenz erkennt.

4. Reifenmontage-Positionserkennungssystem (100) nach einem der Ansprüche 1 bis 3,
wobei der erste Empfänger (110) auf einer Verlängerungslinie angeordnet ist, die ein Rad auf einer linken äußeren Seite entlang der Front-Heck-Richtung des Fahrzeugs (10) passiert, und
wobei der zweite Empfänger (120) auf einer Verlängerungslinie angeordnet ist, die ein Rad auf einer rechten äußeren Seite entlang der Front-Heck-Richtung des Fahrzeugs (10) passiert.

5. Reifenmontage-Positionserkennungssystem (100) nach einem der Ansprüche 1 bis 4,
wobei das vom Sender (41 bis 48) gesendete Funksignal eine Kennung einschließt, die den Sender (41 bis 48) identifiziert.

6. Reifenmontage-Positionserkennungssystem (100) nach einem der Ansprüche 1 bis 5,
wobei das Fahrzeug (10) als ein von einer Zugmaschine (11) gezogener Anhänger (10) ausgebildet ist.

7. Reifenmontage-Positionserkennungsverfahren, das für jeden Reifen (31LO, 31LI, 31RI, 31RO, 32LO, 32LI, 32RI, 32RO) mit einem Sender (41 bis 48) erkennt, an welcher Radposition in einem Fahrzeug (10) mit zwei Achsen (21, 22), bei dem jede Achse (21, 22) ein Zwillingsrad an jeder Seite aufweist, er montiert ist,
wobei das Reifenmontage-Positionserkennungsverfahren Folgendes umfasst:
durch Verwenden einer im Fahrzeug (10) angeordneten Empfängereinheit (105) zum Empfangen eines vom Sender (41 bis 48) gesendeten Funksignals, wobei die Empfängereinheit (105) einen ersten Empfänger (110), der an einer Position angeordnet ist, deren Abstände von jeweiligen Radpositionen sich voneinander unterscheiden, und einen zweiten Empfänger (120) umfasst, der an der gleichen Position wie der erste Empfänger (110) in einer Front-Heck-Richtung des Fahrzeugs (10) angeordnet ist und symmetrisch zum ersten Empfänger (110) in Bezug auf die Mitte der Achse (21, 22) in einer Breitenrichtung des Fahrzeugs (10) angeordnet ist,
Messen einer ersten Signalintensität (R1(x)), die eine Intensität des vom ersten Empfänger (110) empfangenen Funksignals ist, für jeden Sender (41 bis 48); und
Messen einer zweiten Signalintensität (R2(x)), die eine Intensität des vom zweiten Empfänger (120) empfangenen Funksignals ist, für jeden Sender (41 bis 48);
**gekennzeichnet durch**
das Berechnen einer Differenz der ersten Signalintensität (R1(x)) und der zweiten Signalintensität (R2(x)) und eines Gesamtwerts der ersten Signalintensität (R1(x)) und der zweiten Signalintensität (R2(x)) für jeden Sender (41 bis 48); und
das Erkennen der Radposition, an der der Reifen (31L0, 31LI, 31RI, 31RO, 32LO, 32LI, 32RI, 32RO) mit dem Sender (41 bis 48) montiert ist, auf der Basis der Differenz und des Gesamtwerts,
wobei das Erkennen der Radposition Folgendes einschließt:
Erkennen einer Breitenrichtungsposition des Senders (41 bis 48) in der Breitenrichtung des Fahrzeugs (10) auf der Basis eines Absolutwerts der Differenz;
Erkennen einer Front-Heck-Richtungsposition des Senders (41 bis 48) in der Front-Heck-Richtung des Fahrzeugs (10) auf der Basis des Gesamtwerts; und
Erkennen der Radposition auf der Basis einer Kombination aus der Breitenrichtungsposition und der Front-Heck-Richtungsposition.

8. Reifenmontage-Positionserkennungsprogramm, das für jeden Reifen (31LO, 31LI, 31RI, 31RO, 32LO, 32LI, 32RI, 32RO) mit einem Sender (41 bis 48) erkennt, an welcher Radposition in einem Fahrzeug (10) mit zwei Achsen (21, 22), bei dem jede Achse (21, 22) ein Zwillingsrad an jeder Seite aufweist, er montiert ist, wobei das Fahrzeug (10) eine in dem Fahrzeug (10) angeordnete Empfängereinheit (105) zum Empfangen eines von dem Sender (41 bis 48) gesendeten Funksignals umfasst, wobei die Empfängereinheit (105) einen ersten Empfänger (110) umfasst, der an einer Position angeordnet ist, deren Abstände von jeweiligen Radpositionen sich voneinander unterscheiden, und einen zweiten Empfänger (120), der an der gleichen Position wie der erste Empfänger (110) in einer Front-Heck-Richtung des Fahrzeugs (10) angeordnet ist und symmetrisch zum ersten Empfänger (110) in Bezug auf die Mitte der Achse (21, 22) in einer Breitenrichtung des Fahrzeugs (10) angeordnet ist,
wobei das Reifenmontage-Positionserkennungsprogramm einen Rechner veranlasst, Folgendes auszuführen:
ein Verfahren, das eine erste Signalintensität (R1(x)), die eine Intensität des vom ersten Empfänger (110) empfangenen Funksignals ist, für jeden Sender (41 bis 48) misst; und
ein Verfahren, das eine zweite Signalintensität (R2(x)), die eine Intensität des vom zweiten Empfänger (120) empfangenen Funksignals ist, für jeden Sender (41 bis 48) misst;
und **dadurch gekennzeichnet, dass** es einen Rechner veranlasst, Folgendes auszuführen:
ein Verfahren, das eine Differenz der ersten Signalintensität (R1(x)) und der zweiten Signalintensität (R2(x)) und einen Gesamtwert der ersten Signalintensität (R1(x)) und der zweiten Signalintensität (R2(x)) für jeden Sender (41 bis 48) berechnet; und
ein Verfahren, das die Radposition, an der der Reifen (31LO, 31LI, 31RI, 31RO, 32LO, 32LI, 32RI, 32RO) mit dem Sender (41 bis 48) montiert ist, auf der Basis der Differenz und des Gesamtwerts erkennt,
wobei das die Radposition erkennende Verfahren Folgendes erkennt:
eine Breitenrichtungsposition des Senders (41 bis 48) in der Breitenrichtung des Fahrzeugs (10) auf der Basis eines Absolutwerts der Differenz;
eine Front-Heck-Richtungsposition des Senders (41 bis 48) in der Front-Heck-Richtung des Fahrzeugs (10) auf der Basis des Gesamtwerts; und
die Radposition auf der Basis einer Kombination aus der Breitenrichtungsposition und der Front-Heck-Richtungsposition.

## Revendications

1. Système de détection de position de montage de pneus (100) qui détecte pour chaque pneu (31LO, 31LI, 31RI, 31RO, 32LO, 32LI, 32RI, 32RO) ayant un émetteur (41 à 48) sur quelle position de roue dans un véhicule (10) ayant deux essieux (21, 22) dans lequel chaque essieu (21, 22) a une roue jumelée de chaque côté il est monté,
le système de détection de position de montage de pneus (100) comprenant :
une unité de réception (105) agencée dans le véhicule (10) pour recevoir un signal radio transmis par l'émetteur (41 à 48), dans lequel l'unité de réception (105) comprend un premier récepteur (110) agencé au niveau d'une position où des distances par rapport à des positions respectives de roues sont différentes, et un deuxième récepteur (120) agencé au niveau de la même position que le premier récepteur (110) dans une direction avant-arrière du véhicule (10) et agencé symétriquement au premier récepteur (110) par rapport au centre de l'essieu (21, 22) dans une direction de la largeur du véhicule (10) ;
une première partie de mesure (210) qui mesure une première intensité de signal (R1(x)), qui est une intensité du signal radio reçu par le premier récepteur (110), pour chaque émetteur (41 à 48) ; et
une deuxième partie de mesure (220) qui mesure une deuxième intensité de signal (R2(x)), qui est une intensité du signal radio reçu par le deuxième récepteur (120), pour chaque émetteur (41 à 48) ;
**caractérisé par**
une partie calcul (230) qui calcule une différence entre la première intensité de signal (R1(x)) et la deuxième intensité de signal (R2(x)) et une valeur totale de la première intensité de signal (R1(x)) et de la deuxième intensité de signal (R2(x)), pour chaque émetteur (41 à 48) ; et
une partie de détection de position (250) qui détecte la position de roue sur laquelle est monté le pneu (31LO, 31LI, 31RI, 31RO, 32LO, 32LI, 32RI, 32RO) comportant l'émetteur (41 à 48), sur la base de la différence et de la valeur totale,
dans lequel la partie de détection de position (250) détecte :
une position dans la direction de la largeur de l'émetteur (41 à 48) dans la direction de la largeur du véhicule (10) sur la base de la magnitude de la différence ;
une position dans la direction avant-arrière de l'émetteur (41 à 48) dans la direction avant-arrière du véhicule (10) sur la base de la valeur totale ; et
la position de roue sur la base d'une combinaison de la position dans la direction de la largeur et de la position dans la direction avant-arrière.

2. Système de détection de position de montage de pneus (100) selon la revendication 1,
dans lequel la partie de détection de position (250) détermine auquel group l'émetteur (41 à 48) appartient parmi un groupe extérieur avant (G1), un groupe intérieur avant (G2), un groupe extérieur arrière (G3) et un groupe intérieur arrière (G4), sur la base de la combinaison de la position dans la direction de la largeur et de la position dans la direction avant-arrière, et
dans lequel la partie de détection de position (250) détecte la position de roue au sein du groupe sur la base du fait de si la différence est une valeur positive d'une valeur négative.

3. Système de détection de position de montage de pneus (100) selon la revendication 1,
dans lequel la partie de détection de position (250) détermine auquel groupe l'émetteur (41 à 48) appartient parmi un groupe extérieur avant (G1), un groupe intérieur avant (G2), un groupe extérieur arrière (G3) et un groupe intérieur arrière (G4), sur la base de la combinaison de la position dans la direction de la largeur et de la position dans la direction avant-arrière, et
dans lequel la partie de détection de position (250) détecte la position de roue au sein du groupe sur la base d'une valeur absolue de la différence.

4. Système de détection de position de montage de pneus (100) selon l'une quelconque des revendications 1 à 3,
dans lequel le premier récepteur (110) est disposé sur une ligne d'extension passant par une roue à un côté extérieur gauche le long de la direction avant-arrière du véhicule (10), et
dans lequel le deuxième récepteur (120) est disposé sur une ligne d'extension passant par une roue à un côté extérieur droit le long de la direction avant-arrière du véhicule (10).

5. Système de détection de position de montage de pneus (100) selon l'une quelconque des revendications 1 à 4,
dans lequel le signal radio transmis par l'émetteur (41 à 48) inclut un identifiant qui identifie l'émetteur (41 à 48).

6. Système de détection de position de montage de pneus (100) selon l'une quelconque des revendications 1 à 5,
dans lequel le véhicule (10) est sous forme d'une remorque (10) tractée par un tracteur (11).

7. Procédé de détection de position de montage de pneus qui détecte pour chaque pneu (31LO, 31LI, 31RI, 31RO, 32LO, 32LI, 32RI, 32RO) ayant un émetteur (41 à 48) sur quelle position de roue dans un véhicule (10) ayant deux essieux (21, 22) dans lequel chaque essieu (21, 22) a une roue jumelée de chaque côté il est monté,
le procédé de détection de position de montage de pneus comprenant : en utilisant une unité de réception (105) agencée dans le véhicule (10) pour recevoir un signal radio transmis par l'émetteur (41 à 48), dans lequel l'unité de réception (105) comprend un premier récepteur (110) agencé au niveau d'une position où des distances par rapport à des positions respectives de roues sont différentes, et un deuxième récepteur (120) agencé au niveau de la même position que le premier récepteur (110) dans une direction avant-arrière du véhicule (10) et agencé symétriquement au premier récepteur (110) par rapport au centre de l'essieu (21, 22) dans une direction de la largeur du véhicule (10),
mesurer une première intensité de signal (R1(x)), qui est une intensité du signal radio reçu par le premier récepteur (110), pour chaque émetteur (41 à 48) ; et
mesurer une deuxième intensité de signal (R2(x)), qui est une intensité du signal radio reçu par le deuxième récepteur (120), pour chaque émetteur (41 à 48) ;
**caractérisé par**
le calcul d'une différence entre la première intensité de signal (R1(x)) et la deuxième intensité de signal (R2(x)) et une valeur totale de la première intensité de signal (R1(x)) et de la deuxième intensité de signal (R2(x)), pour chaque émetteur (41 à 48) ; et
la détection de la position de roue sur laquelle est monté le pneu (31LO, 31LI, 31RI, 31RO, 32LO, 32LI, 32RI, 32RO) comportant l'émetteur (41 à 48), sur la base de la différence et de la valeur totale,
dans lequel la détection de la position de roue inclut les étapes consistant à :
détecter une position dans la direction de la largeur de l'émetteur (41 à 48) dans la direction de la largeur du véhicule (10) sur la base d'une valeur absolue de la différence ;
détecter une position dans la direction avant-arrière de l'émetteur (41 à 48) dans la direction avant-arrière du véhicule (10) sur la base de la valeur totale ; et
détecter la position de roue sur la base d'une combinaison de la position dans la direction de la largeur et de la position dans la direction avant-arrière.

8. Programme de détection de position de montage de pneus qui détecte pour chaque pneu (31LO, 31LI, 31RI, 31RO, 32LO, 32LI, 32RI, 32RO) ayant un émetteur (41 à 48) à quelle position de roue dans un véhicule (10) ayant deux essieux (21, 22) dans lequel chaque essieu (21, 22) a une roue jumelée de chaque côté il est monté, le véhicule (10) comprenant une unité de réception (105) disposée dans le véhicule (10) pour recevoir un signal radio transmis par l'émetteur (41 à 48), dans lequel l'unité de réception (105) comprend un premier récepteur (110) agencé au niveau d'une position où des distances par rapport à des positions respectives de roues sont différentes, et un deuxième récepteur (120) agencé au niveau de la même position que le premier récepteur (110) dans une direction avant-arrière du véhicule (10) et agencé symétriquement au premier récepteur (110) par rapport au centre de l'essieu (21, 22) dans une direction de la largeur du véhicule (10),
le programme de détection de position de montage de pneus, qui amène un ordinateur à exécuter :
un processus qui mesure une première intensité de signal (R1(x)), qui est une intensité du signal radio reçu par le premier récepteur (110), pour chaque émetteur (41 à 48) ; et
un processus qui mesure une deuxième intensité de signal (R2(x)), qui est une intensité du signal radio reçu par le deuxième récepteur (120), pour chaque émetteur (41 à 48) ;
et **caractérisé par** le fait d'amener un ordinateur à exécuter :
un processus qui calcule une différence entre la première intensité de signal (R1(x)) et la deuxième intensité de signal (R2(x)) et une valeur totale de la première intensité de signal (R1(x)) et de la deuxième intensité de signal (R2(x)), pour chaque émetteur (41 à 48) ; et
un processus qui détecte la position de roue sur laquelle est monté le pneu (31LO, 31LI, 31RI, 31RO, 32LO, 32LI, 32RI, 32RO) ayant l'émetteur (41 à 48), sur la base de la différence et de la valeur totale,
dans lequel le processus qui détecte la position de roue détecte :
une position dans la direction de la largeur de l'émetteur (41 à 48) dans la direction de la largeur du véhicule (10) sur la base d'une valeur absolue de la différence ;
une position dans la direction avant-arrière de l'émetteur (41 à 48) dans la direction avant-arrière du véhicule (10) sur la base de la valeur totale ; et
la position de roue sur la base d'une combinaison de la position dans la direction de la largeur et de la position dans la direction avant-arrière.
